# EUROPEAN PATENT SPECIFICATION

(11) **EP 0 765 489 B1**
(45) Date of publication and mention of the grant of the patent: **26.04.2000**
(21) Application number: 95924303.1
(22) Date of filing: 20.06.1995
(51) Int. Cl.: G02B 6/38

(54) **CONNECTOR ASSEMBLY**
STECKERVORRICHTUNG
ENSEMBLE CONNECTEUR

(30) Priority: 22.06.1994 NL 9401025
(43) Date of publication of application: 02.04.1997
(73) Proprietor: FRAMATOME CONNECTORS INTERNATIONAL, 92084 Paris La Défense (FR)
(72) Inventor: MORLION, Danny, B-9040 St. Amandsberg (BE); JONCKHEERE, Luc, B-1700 Dilbeek (BE); VAN KOETSEM, Jan, Peter, Karel, B-2070 Zwijndrecht (BE)
(74) Representative: de Vries, Johannes Hendrik Fokke
(86) International application number: EP9502401
(87) International publication number: WO9535518

(56) References cited:
- EP-A- 0 497 011
- EP-A- 0 571 037
- WO-A-95/35519
- DE-A- 2 822 211
- GB-A- 2 054 192

## Description

The invention relates to a connector assembly for interconnecting optical conductors, comprising first and second connector parts, wherein each connector part is provided with an alignment piece with one or more alignment channels for first and second conductors, respectively, wherein each conductor includes a contact pad in the upper surface of the corresponding alignment piece and wherein the first alignment piece is provided with a reference slot with at least one straight first reference face and the second alignment piece is provided with a reference key with at least one straight second reference face abutting the first reference face in the coupled position of the connector parts, said reference faces being located at an accurately determined location with respect to the alignment channels.

A connector assembly of this type is disclosed in EP-A-0 571 037 and in the earlier European patent application 93203458 (EP-A-0 602 726) having priority date of 16/12/1992 and publication date of 22/06/1994. This known connector assembly has the advantage that for manufacturing it is relatively simple to provide a reference face at a very accurately predetermined location with respect to the alignment channels, so that by simply pressing the reference faces against each other an accurate positioning of the contact pads of the conductors with respect to each other is obtained. In a connector assembly of this type the problem may occur that air is present between the contact pads of the conductors of both connector parts. In view of refraction at the interfaces between the conductors and air it is not possible to obtain a good signal transmission in that case.

EP-A-0 497 011 discloses a circuit board assembly comprising two circuit boards with an embedded optical fiber. Each optical fiber has an optical contact pad in the surface of the circuit board and a transparent elastic film having substantially the same refraction index as the optical fibers may be interposed between the optical contact pads.

The invention aims to provide a connector assembly of the above-mentioned type wherein the connection between the conductors in the coupled position of the connector parts is improved.

To this end the connector assembly according to the invention is characterized by the characterizing features of claim 1.

Thereby, a foil layer can be replaced after one or more times decoupling the connector parts.

The invention will be further explained by reference to the drawings in which an embodiment of the connector assembly according to the invention is schematically shown.

Fig. 1 shows a perspective view of a first connector part of the connector assembly according to the invention.

Fig. 2 is a perspective view of a second connector part which together with the first connector part of Fig. 1 forms an embodiment of the connector assembly according to the invention.

Fig. 3 is a perspective view of the second connector part of Fig. 2, wherein for explanation purposes a foil layer is not shown, which foil layer covers the contact pads of the conductors in normal use.

Fig. 4 is a perspective view at a much larger scale of the alignment piece of the first connector part of Fig. 1, wherein for explanation purposes the conductors are not shown.

Fig. 5 is a perspective view at a much larger scale of the alignment piece of the second connector part in the situation without foil layer as shown in Fig. 3.

Fig. 6 is a view corresponding with Fig. 5, wherein the clamping elements and the foil layer are shown detached from the alignment piece.

Fig. 7 very schematically shows two conductors in the coupled position of the connector parts.

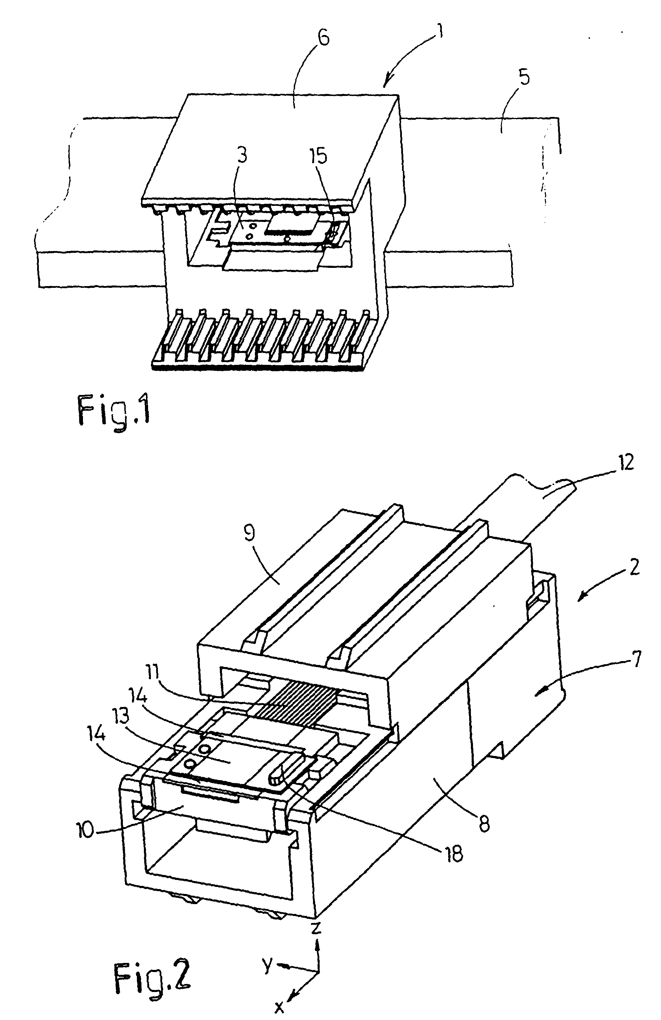

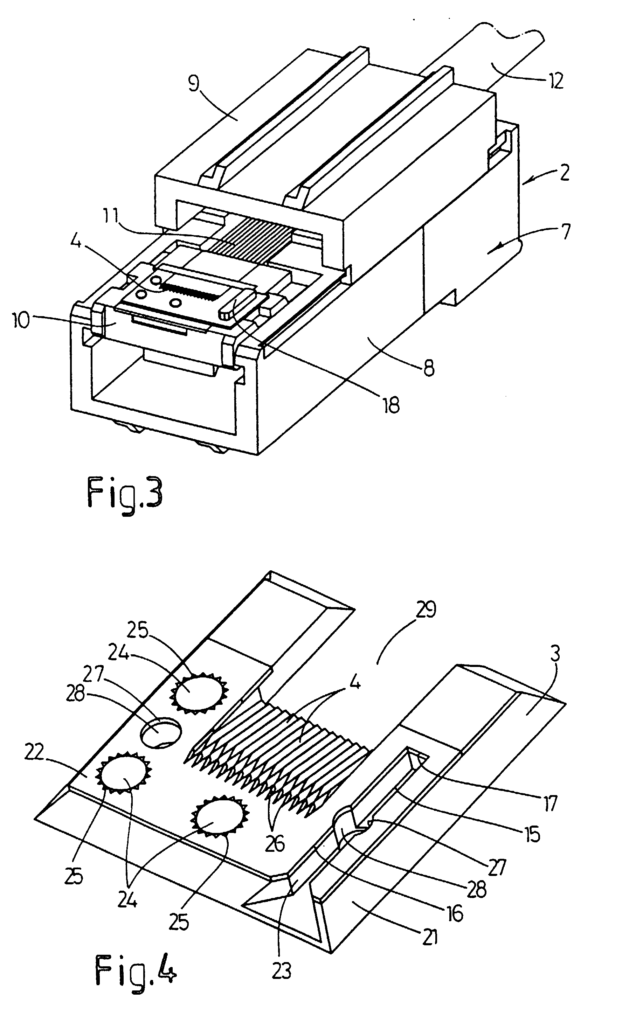

Referring to Figs. 1 and 2 there are shown a first connector part 1 and a second connector part 2 of an embodiment of the connector assembly for interconnecting optical conductors. The first connector part 1 is provided with a first alignment piece 3 shown in detail in Fig. 4. The alignment piece 3 comprises adjacent alignment channels 4 for first conductors which are not shown in Figs. 1 and 4 for the sake of clearness. These first conductors which are made as optical conductors are embedded in a printed circuit board 5 in which the alignment piece 3 is also embedded. Each conductor is located in a corresponding alignment channel 4 so that the position of the conductors is determined by the alignment channels 4. As shown in Fig. 4, these alignment channels 4 extend obliquelly upwardly to the upper or exposed surface of the alignment piece 3 so that the ends of the conductors are gradually guided towards this upper surface. In the embodiment shown the upper surface of the alignment piece 3 coincides with the upper surface of the printed circuit board 5, it is, however, also possible that the alignment piece 3 projects or is countersunk with respect to the upper surface of the printed circuit board 5. The parts of the conductors projecting out of the alignment piece 3 are removed by polishing in such a manner that contact pads of the conductors are obtained in the upper surface of the alignment piece 3, as will be described hereinafter.

The connector part 1 further comprises a housing 6 which is mounted on the printed circuit board 5 as shown in Fig. 1 and encloses the alignment piece 3 with the contact pads of the conductors.

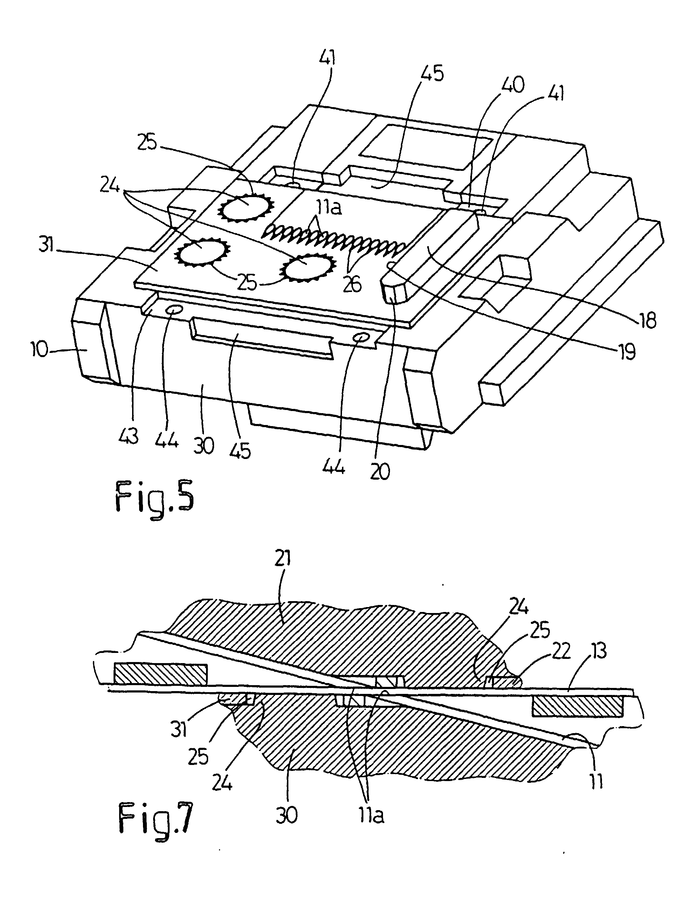

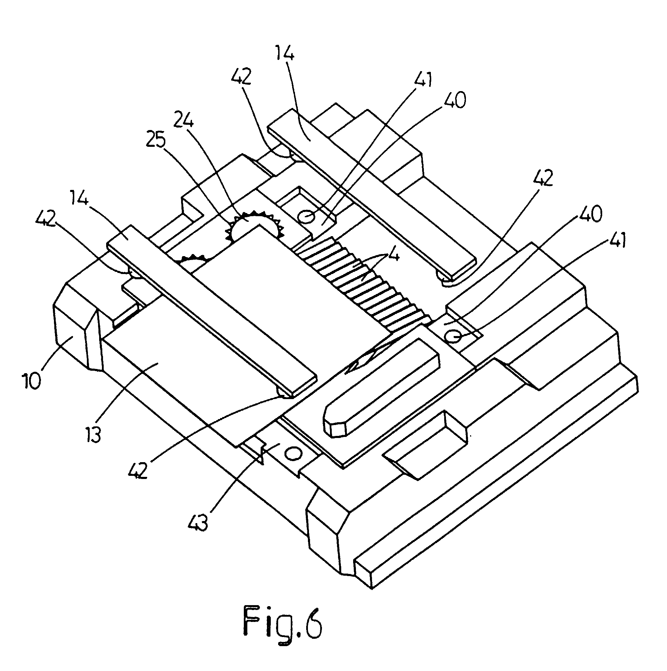

The second connector part 2 shown in Fig. 2 is provided with a housing 7 comprising a support part 8 and a cap 9 slidable on the support part 8. An alignment piece 10 is mounted in the support part 8 in a movable manner in three mutual perpendicular directions x, y and z. These x-, y- and z-directions are schematically indicated by arrows in Fig. 2. The alignment piece 10 is shown in detail in Figs. 5 and 6 and comprises in the same manner as the alignment piece 3 adjacent alignment channels 4 for optical conductors 11 of a cable 12. The conductors 11 are gradually guided upwardly in the alignment channels 4 towards the upper surface of the alignment piece 10. During manufacturing the parts of the conductors 11 projecting out of the upper surface of the alignment piece 10 are removed by polishing in such a manner that contact pads 11a (see Fig. 5) are obtained in the upper surface of the alignment piece 10 as will be described hereinafter. In Fig. 2 the contact pads of the conductors 11 are not visible in that a part of the upper surface of the alignment piece 10 and the contact pads of the conductors 11 are covered by a foil layer 13 consisting of a plastic material and attached to the alignment piece 10 by clamping elements 14. Fig. 3 shows the connector part 2 wherein the foil layer 13 is removed so that the ends of the alignment channels 4 in the alignment piece 10 are visible.

The alignment piece 3 is provided with a reference slot 15 with two straight reference faces 16 and 17, respectively, lying at very accurately determined locations in longitudinal and transverse direction, respectively, with respect to the alignment channels 4. The alignment piece 10 is provided with a reference key 18 with straight reference faces 19 and 20, wherein in the same manner as the reference face 16 and 17, respectively, the reference face 19 lies at a very accurately determined location with respect to the longitudinal direction of the alignment channels 4 and the reference face 10 lies at a very accurately determined location with respect to the ends 26 of the alignment channels 4. When the connector part 2 is inserted into the connector part 1, the reference key 18 is shifted into the reference slot 15 and the reference faces 19, 20 are pressed against the reference faces 16, 17, so that the alignment channels 4 of the respective alignment pieces 3, 10 are positioned accurately in longitudinal and transverse directions with respect to each other and thereby the contact pads of the corresponding conductors.

The operation of the cooperation between reference slot 15 and reference key 18 and the corresponding reference faces 16, 17 and 19, 20, respectively, is further described in EP-A-0 571 037 and the connector assembly as a whole is further described in the earlier European patent application EP-A-0 602 726.

As further disclosed in WO 95/35519, having priority date of 22/06/1994 and publication date of 28/12/1995, the same applicant the alignment piece 3 comprises a support plate 21 which is made for example of plastic material for example by injection moulding, and a thin guiding plate 22 attached to the same and made with very high accuracy. The reference slot 15 with the reference faces 16, 17 is formed in this guiding plate 22, so that the accuracy of the reference faces is very high. A corresponding slot 23 is made in the support plate 21, the dimensions of said slot 23 being at least equal but preferably larger than the dimensions of the reference slot 15.

Fig. 4 shows the alignment piece 3 before the conductors are provided. As shown in Fig. 4, the support plate 21 is provided with three frusto-conical polishing projections 24 projecting through openings 25 of the guiding plate 22. These openings 25 are provided with a toothed edge engaging the corresponding polishing projection 24 in such a manner that an attachment of the guiding plate 22 on the support plate 21 is guaranteed. The alignment channels 4 debouch in a V-shaped slot 26 in the guiding plate 22, said V-shaped slot 26 determining the location of the contact pad of the corresponding conductor. The alignment channels 4 of the support plate 21 provide a prepositioning of the conductors and the V-shaped slots 26 provide a precision positioning.

Finally, the guiding plate 22 comprises two positioning openings 27 and the support plate 21 has corresponding openings 28, the diameter of which is at least equal but preferably larger than the same of the openings 27, so that the diameter of the positioning openings 27 are determining. For manufacturing the connector part 1 the alignment piece 3 is placed with the positioning openings 27, 28 on positioning pins of a wiring table. Thereafter, the conductors are shifted into the alignment channels 4 until the ends project at least partially above the upper surface of the guiding plate 22. Thereafter, the conductors are moulded in an epoxy resin for example in the open space 29 and in the alignment channels 4. During moulding the reference slot 15 and the slot 23 and positioning openings 27 are covered. After moulding the ends of the conductors projecting out of the alignment channels 4 are removed by polishing, wherein the polishing depth is measured by measuring the surface of the polishing projections 24. In the embodiment shown the contact pads should be lying in the upper surface of the guiding plate 22. Reaching this situation shown in Fig. 4 is monitored by comparing the surface of the polishing projections 24 continuously with a predetermined value which corresponds with the surface of a polishing projection in cross section with the upper surface of the guiding plate 22.

As shown in Fig. 5 the alignment piece 10 is composed in the same manner of a support plate 30 made from a plastic material, for example by injection moulding, and a guiding plate 31 manufactured with very high accuracy. The reference key 18 is made as a separate part also with a very high accuracy and is fittingly mounted in an opening of the guiding plate 31. The reference key 18 can also be made in one piece with the guiding plate 26. As shown in Fig. 5 the support plate 30 is also provided with frusto-conical polishing projections 24 and the guiding plate 31 is provided with openings 25 with a toothed edge. In this manner, the guiding plate 31 is attached to the support plate 30. The alignment channels 4 of the alignment piece 10 also debouch in V-shaped slots 26 in the guiding plate 31. These V-shaped slots 26 determine the location of the contact pads lla of the conductors 11.

Fig. 6 shows the alignment piece 10 before the conductors 11 are moulded in the alignment piece, wherein the clamping elements 14 and the foil layer 13 are shown detached from the alignment piece 10. Fig. 5 shows that after the moulding step of the conductors 11 and the polishing step a slot 40 is provided in the upper surface of the alignment piece 10 at one side of the alignment channels 4, said slot 40 having openings 41 in which the clamping element 14 can be attached while clamping the foil layer 13. To this end the clamping element 14 has pins 42 which are attached with a light drive fit in the holes 41. In a corresponding manner a slot 43 with holes 44 is formed at the other side of the alignment channels 4 in the upper surface of the alignment piece 10 for receiving a corresponding clamping element 14 with pins 42 which can be attached in the holes 44 with a light drive fit. A slot 45 is adjacent to the slots 40 and 43, respectively, through which slot 45 a tool can be inserted under the clamping element 14 for removing the same. In this manner the foil layer 13 can be easily removed.

The application of the foil layer 13 made of a suitable plastic material has the advantage that air can no longer be present between the contact pads of the conductors of both connector parts 1, 2 in the coupled position and the interface layer between two opposite contact pads 46 of the conductors is formed by the foil layer 13 as schematically shown in Fig. 7. The material of the foil layer 13 is chosen in such a manner that the refractive index thereof substantially corresponds with the refractive index of the conductors so that an optimum transmission from one conductor to the other conductor is guaranteed.

It is noted that the slot 43 with the adjacent 45 can also be made in the front surface of the alignment piece 10, if desired.

The invention is not restricted to the above-described embodiment which can be varied in a number of ways within the scope of the appended claims.

## Claims

1. Connector assembly for interconnecting optical conductors, comprising first and second connector parts (1, 2), wherein each connector part is provided with an alignment piece (3, 10) with one or more alignment channels (4) for first and second conductors (11), respectively, wherein each conductor (11) includes a contact pad (11a) in an exposed surface of the corresponding alignment piece (3, 10) and wherein the first alignment piece (3) is provided with a reference slot (15) with at least one straight first reference face (16, 17) and the second alignment piece (10) is provided with a reference key (18) with at least one straight second reference face (19, 20) abutting the first reference face in the coupled position of the connector parts, said reference faces being located at an accurately determined location with respect to the alignment channels (4) **characterized in that** in at least one connector part (2) a portion of the exposed surface of the alignment piece (10) and the contact pads (11a) of the conductors (11) lying in said upper surface are covered by a plastic foil layer (13) providing a defined interface with a predetermined refractive index between the contact pads of the respective conductors in the coupled position of the connector parts (1, 2), wherein the foil layer (13) is detachably mounted on the alignment piece (10) by means of detachable clamping elements (14), the alignment piece (10) being provided with a recess (40, 43) for a clamping element (14) at both sides of the contact pads (11a) of the conductors (11), in which recess the clamping element can be detachably mounted while clamping the foil layer (13), wherein each recess (40, 43) is joined by a second recess (45) for inserting a tool for removing the clamping element (14).

2. Connector assembly according to claim 1,
**characterized in that** each recess (40, 43) includes two holes (41, 44) and that each clamping element (14) is provided with two pins (42) being received in the holes with a light drive fit.

3. Connector assembly according to claim 1 or 2,
**characterized in that** one or both alignment pieces (3, 10) is/are assembled from a support plate (21, 30) and a guiding plate (22, 31) made with very high accuracy, wherein at least the ends of the alignment channels (4) are formed in the guiding plate and the reference slot (15) or the reference key (18), respectively, is part of the guiding plate (22, 31).

## Patentansprüche

1. Verbinderanordnung zur Kopplung optischer Leiter, die ein erstes und ein zweites Verbinderteil (1, 2) umfaßt, in der
jedes Verbinderteil mit einem Ausrichtstück (3, 10) mit einem oder mehreren Ausrichtkanälen (4) für einen ersten bzw. zweiten Leiter (11) versehen ist, wobei
jeder Leiter (11) eine Kontaktanschlußfläche (11a) an einer freien Fläche des entsprechenden Ausrichtstücks (3, 10) enthält und
das erste Ausrichtstück (3) mit einem Referenzschlitz (15) mit mindestens einer geraden ersten Referenzfläche (16, 17) und das zweite Ausrichtstück (10) mit einem Referenzschlüssel (18) mit mindestens einer geraden zweiten Referenzfläche (19, 20) ausgestattet ist, die während der Kopplungsstellung der Verbinderteile an der ersten Referenzfläche anliegt, und
wobei die Referenzflächen, bezogen auf die Ausrichtkanäle (4) an einer genau vorgegebenen Stelle liegen,
dadurch gekennzeichnet,
daß ein Abschnitt der freien Fläche des Ausrichtstücks (10) in mindestens einem Verbinderteil (2) und die Kontaktanschlußflächen (11a) der Leiter (11), die in der freien Fläche liegen, mit einer Folienschicht aus Kunststof (13) bedeckt sind, die zwischen den Kontaktanschlußflächen (11a) der entsprechenden Leiter in der gekoppelten Stellung der Verbinderteile (1, 2) eine vorgegebene Grenzschicht mit einem vorgegebenen Brechnungsindex angibt,
wobei die Folienschicht (13) mit Hilfe von abnehmbaren Klemmelementen (14) abnehmbar auf dem Ausrichtstück (10) angeordnet ist, und das Ausrichtstück (10) mit einer Ausnehmung (40, 43) für ein Klemmelement (14) an beiden Seiten der Kontaktanschlußflächen (11a) der Leiter (11) versehen ist, in der das Klemmelement (14) abnehmbar montiert sein kann, während sie die Folienschicht (13) angeklemmt, und
jede Ausnehmung (40), 43) mit einer zweiten Ausnehmung (45) zur Einführung eines Werkzeugs zur Entfernung des Klemmelements (14) gekoppelt ist.

2. Verbinderanodnung nach Anspruch 1, dadurch gekennzeichnet, daß jede Ausnehmung (40, 43) zwei Löcher (41, 44) aufweist, und daß jedes Klemmelement (14) mit zwei Stiften (42) versehen ist, die in den Löchern mit einer leichten Preßpassung aufgenommen werden.

3. Verbinderanodnung nach Anspruch 1 oder 2, dadurch gekennzeichnet, daß ein Ausrichtstück oder beide Ausrichtstücke (3, 10) von einer Stützplatte (21, 30) angebracht wird/werden, und eine Führungsplatte (22, 31) mit einer sehr hohen Genauigkeit hergestellt ist, wobei mindestens die Enden der Ausrichtkanäle (4) in der Führungsplatte ausgebildet sind und der Referenzschlitz (15) bzw. der Referenzschlüssel (18) Teil der Führungsplatte (22, 31) ist.

## Revendications

1. Ensemble connecteur destiné à interconnecter des conducteurs optiques, comprenant des première et seconde parties (1, 2) de connecteur, chaque partie de connecteur étant munie d'une pièce (3, 10) d'alignement avec un ou plusieurs canaux (4) d'alignement destinés à des premier et second conducteurs (11) respectifs, chaque conducteur (11) comportant une plage (11a) de contact dans une surface exposée de la pièce (3, 10) d'alignement correspondante et la première pièce (3) d'alignement étant munie d'une fente (15) de référence ayant au moins une première face (16, 17) de référence droite et la seconde pièce (10) d'alignement étant munie d'une clavette (18) de référence ayant au moins une seconde face (19, 20) de référence droite en butée contre la première face de référence dans la position raccordée des parties de connecteur, lesdites faces de référence étant situées à une position déterminée avec précision par rapport aux canaux (4) d'alignement, caractérisé en ce que dans au moins une partie (2) de connecteur, une partie de la surface exposée de la pièce (10) d'alignement et des plages (11a) de contact des conducteurs (11) se situant dans ladite surface supérieure, sont recouvertes d'une couche (13) constituée par une feuille de matière plastique fournissant une interface définie avec un indice de réfraction prédéterminé entre les plages de contact des conducteurs respectifs dans la position raccordée des parties (1, 2) de connecteur, la couche (13) formant feuille étant montée de façon amovible sur la pièce (10) d'alignement au moyen d'éléments (14) de serrage amovibles, la pièce (10) d'alignement étant munie d'un évidement (40, 43) destiné à un élément (14) de serrage des deux côtés des plages (11a) de contact des conducteurs (11), évidement dans lequel l'élément de serrage peut être monté de façon amovible tout en serrant la couche (13) formant feuille, chaque évidement (40, 43) étant rejoint par un second évidement (45) permettant l'insertion d'un outil destiné à retirer l'élément (14) de serrage.

2. Ensemble connecteur selon la revendication 1, caractérisé en ce que chaque évidement (40, 43) comporte deux trous (41, 44) et en ce que chaque élément (14) de serrage est muni de deux broches (42) qui sont reçues dans les trous par un ajustement nécessitant une légère poussée.

3. Ensemble connecteur selon la revendication 1 ou 2, caractérisé en ce que l'une des pièces (3, 10) d'alignement ou les deux, est/sont assemblée(s) à partir d'une plaque (21, 30) de support et d'une plaque (22, 31) de guidage réalisées avec une précision très élevée, au moins les extrémités des canaux (4) d'alignement étant formées dans la plaque de guidage, et la fente (15) de référence ou la clavette (18) de référence, respectivement, faisant partie de la plaque (22, 31) de guidage.
